Europäisches Patentamt

European Patent Office

Office européen des brevets

(19)

(11) Publication number: **0 041 971**
**B1**

(12) **EUROPEAN PATENT SPECIFICATION**

(45) Date of publication of patent specification: **09.05.84**

(51) Int. Cl.³: **B 60 T 11/28**

(21) Application number: **80902369.0**

(22) Date of filing: **04.12.80**

(86) International application number:
**PCT/FI80/00012**

(87) International publication number:
**WO 81/01692 25.06.81 Gazette 81/15**

(54) **PRESSURE CONVERTER FOR HYDRAULIC BRAKES, PARTICULARLY FOR TRACTORS.**

(30) Priority: **07.12.79 FI 793829**

(43) Date of publication of application:
**23.12.81 Bulletin 81/51**

(45) Publication of the grant of the patent:
**09.05.84 Bulletin 84/19**

(84) Designated Contracting States:
**DE FR GB SE**

(56) References cited:
**DE - A - 2 422 190**
**DE - B - 2 363 001**
**US - A - 4 133 343**

(73) Proprietor: **Valmet Oy**
**Punanotkonkatu 2**
**SF-00130 Helsinki 13 (FI)**

(72) Inventor: **MÄKITALO, Seppo**
**Ketunpolku 12**
**SF-40400 Jyväskylä 40 (FI)**
Inventor: **TAPANILA, Alpo**
**Väliaitankatu 6 C 24**
**SF-40300 Jyväskylä 30 (FI)**

(74) Representative: **Tiedtke, Harro, Dipl.-Ing. et al,**
**Patentanwaltsbüro Tiedtke-Bühling-Kinne- Grupe-**
**Pellmann-Grams Bavariaring 4**
**D-8000 München 2 (DE)**

Courier Press, Leamington Spa, England.

## Description

The present invention relates to a pressure converter for hydraulic brakes, particularly for brakes of a tractor, which converter comprises a body and a piston device located in the borings or similar of the body, which piston device has a primary compartment and a secondary compartment, the piston of the primary compartment having an essentially larger area of the cross-section than the secondary compartment, and the primary pressure being conducted to the primary compartment from the brake system master cylinder or similar, and the amplified secondary pressure being conducted from the secondary compartment to the wheel cylinder.

It is a well-known arrangement to use a hydraulic pressure converter (pressure amplifier) in the brake system of a vehicle for the provision of a sufficient braking force with available pedal forces. Known pressure converters for brakes operate in two phases in such a way that, at first, the brake linkage clearances are closed with a small hydraulic conversion ratio or with hydraulic conversion ratio=1, and then the hydraulic conversion ratio is so increased as to provide a sufficient force in order to compress the braking components against each other.

In tractors and similar equipment it is usual to use steering-brake operation, which means that the brake pedal comprises two parts which can be coupled together. In the coupled position brakes are applied to both rear wheels. After opening said coupling either of two pedals can be pressed braking effect being consequently applied to one of the rear wheels of the tractor only. When using the steering brake operation, such peak pressures can occur in the master cylinder that are about two times higher than those occurring in a normal braking. Without special arrangements, the brake equipment has to be dimensioned according to this peak pressure, so, in known brake equipment the conversion ratio of the pressure converter is determined by the allowed maximum pressure of the brake circuit.

From DE—AS 23 63 001 a pressure converter according to the preamble of claim 1 is known. This converter however is designed as a pressure retaining valve, which acts in such a way that when the master cylinder is activated the secondary pressure to be converted first remains constant, then rises with the amplifying gradient of the differential piston and at last rises with the same gradient as the primary pressure, whereas after deactivating the master cylinder the secondary pressure falls with a constant gradient together with the primary pressure. With this known pressure converter, too, the above mentioned peak pressures in the brake system can still occur and the brake equipment into which this converter is integrated has to be dimensioned according to this peak pressure.

An object of the present invention is to provide a pressure converter according to the preamble of claim 1, which allows higher convertion ratios than before for higher secondary pressures with lower primary pressures than before, so that this pressure converter will be particularly suitable for the application in brake systems of a tractor. Another object is to provide such a pressure converter in which the maximum allowed secondary pressures are not exceeded even when using steering braking or in other similar situations.

For attaining the objects mentioned above, the principal characteristic feature of the invention is that the pressure converter is equipped with a pressure limiting valve, by means of which the secondary pressure is limited according to the maximum allowed pressure. In addition the pressure converter according to the invention is provided with means which prior to the operation of the converter to amplify the secondary pressure let the secondary pressure rise with essentially the same gradient as the primary pressure. Finally the conversion ratio of the converter is selected high enough to essentially provide the maximum allowed secondary pressure with primary pressures available in normal braking.

Embodiments of the invention will now be described in detail, by way of example only, with reference to the accompanying drawings.

Figure 1 is an axial-section view of a pressure converter in accordance with the invention. At the same time, Figure 1 shows section I—I in Figure 2.

Figure 2 shows section II—II in Figure 1.

Figure 3 shows the characteristic pressure curve of a converter in accordance with the invention.

A pressure converter illustrated in the figures comprises a body part 10, in which there is one cylindrical boring 11 and another cylindrical boring 12 of a larger diameter. In said borings 11, 12 there is piston 15, whose cylindrical part 15a fits into boring 11 and cylindrical part 15b fits into the larger boring 12. In cylindrical parts 15a and 15b there are sealings 16 and 17. Primary pressure $p_1$ is conducted to primary compartment 24 of the converter from the master cylinder (not shown) to whose piston the movement is transmitted from brake pedals. Primary pressure $p_1$ is conducted to primary compartment 24 through opening 14, and secondary pressure $p_2$ of the secondary compartment 27 is conducted through opening 13 to the wheel cylinder (not shown).

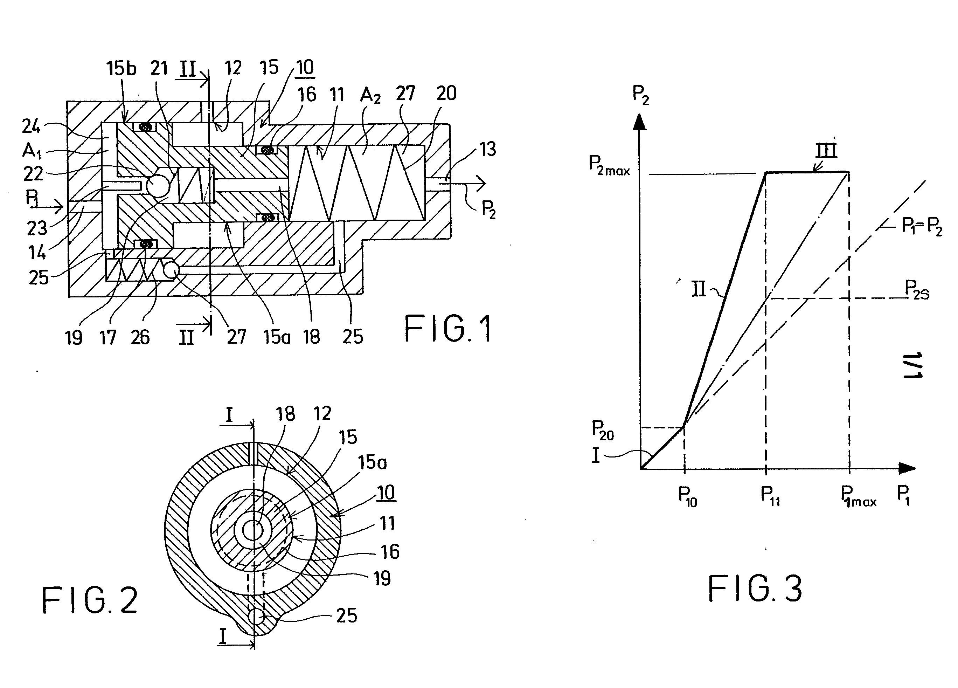

Within boring 18 of piston 15 there is a valve comprising spring 21 and valve ball 22. As, in Figure 1, piston 15 is in the unloaded position, in which position primary pressure $p_1=0$, piston 15 is, being pressed by spring 20 located in compartment 27, in a position in which pin 23 pushes valve ball 22 to an open position. As, in this position, primary pressure $p_1$ begins to be

increased, primary pressure $p_1$ is communicated, through valve 21, 22 that has been opened, and channel 18, directly to secondary compartment 27, in which case the conversion ratio of the converter is $p_2/p_1=1$. Now the converter operates in the lower part of the characteristic curve shown in Figure 3, along line $p_1=p_2$ up to points $p_{20}$ and $p_{10}$ (area I). As, in primary compartment 24, primary pressure $p_1$ grows high enough to be able to overcome the counterpressure of spring 20, piston 15 beings to move to the right in Figure 1, and valve 21, 22 is closed. In Figure 1, piston 15 has moved enough to allow said valve to close, in which case the converter operates in area II of the characteristic curve shown in Figure 3, the conversion ratio now being

$$p_2/p_1=A_1/A_2$$

where $A_1$ is the piston area of the primary compartment and $A_2$ is the piston area of the secondary compartment.

As shown in Figure 3, with primary pressure $p_{11}$ it is possible to provide the maximum secondary pressure $p_{2max}$, after which, as primary pressure $p_1$ is further increased, the converter operates in part III of the characteristic curve. This function is brought about as follows: Channel 25 connects secondary compartment 27 to the primary compartment. This channel is fitted with a valve device comprising spring 26 and valve ball 27. The stiffness of spring 26 is so selected as to make said pressure-limiting valve start to function at a certain, preferably adjustable, maximum secondary pressure $p_{2max}$. The secondary pressure $p_2$ cannot rise higher than pressure $p_{2max}$, and the flat section III of the characteristic curve is carried out. Then, although primary pressure $p_1$ rises higher than pressure $p_{11}$, for instance to pressure $p_{1max}$, the secondary pressure will not exceed the highest allowed secondary pressure $p_{2max}$. For instance in tractor use, $p_{1max}$ means the maximum primary pressure that may occur in steering-brake operation.

As obvious from Figure 3, the maximum secondary pressure $p_{2max}$ is provided by the highest available pressure $p_{11}$ already occurring in the normal brake operation. If a pressure converter equipped with a pressure-limiting function, similar to that described above, were not used, the highest practicable converting ratio of the converter would be the one indicated by phantom line $p_{2s}$, should one wish to avoid the exceeding of the maximum secondary pressure $p_{2max}$ also at the highest occurring primary pressures $p_{1max}$. In a normal brake operation with the highest available primary pressure $p_{11}$, characteristic curve $p_{2s}$ would allow such a secondary pressure only which would be only half of the maximum secondary pressure $p_{2max}$.

## Claims

1. A pressure converter for hydraulic brakes, particularly for brakes of a tractor, which converter comprises a body (10) and a piston device (15) located in borings or similar of the body, which piston device defines a primary compartment (24) and a secondary compartment (27), the cross-section (A1) of the piston in the primary compartment having an essentially larger area than the cross-section ($A_2$) of the piston in the secondary compartment, and the primary pressure ($p_1$) being conducted to the primary compartment (24) from the brake system master cylinder or similar, and the amplified secondary pressure ($p_2$) being conducted from the secondary compartment (27) to the wheel cylinder, characterized in that the pressure converter is equipped with a pressure-limiting valve arrangement (25 to 27), by means of which the secondary pressure ($p_2$) is limited according to the maximum allowed secondary pressure ($p_{2max}$), means (22, 23) are provided which prior to the operation of the converter to amplify the secondary pressure ($p_2$) let the secondary pressure rise with essentially the same gradient (line I, $p_1=p_2$) as the primary pressure, and the convertion ratio ($A_1/A_2$) of the converter is selected high enough to essentially provide the maximum allowed secondary pressure ($p_{2max}$) with primary pressures ($p_{11}$) available in normal braking.

2. A pressure converter in accordance with claim 1, wherein the equipment for limiting the secondary pressure ($p_2$) comprises a channel (25), which connects the secondary compartment (27) to the primary compartment (24), and wherein valve equipment (26, 27), arranged so as to be essentially opened at the highest allowed secondary pressure ($p_{2max}$), is fitted into said channel.

3. A pressure converter in accordance with claim 1 or 2, wherein in the piston (15) of the pressure converter there is a channel (18), in accociation with which there is a valve device (19, 21, 22), and that the pressure converter comprises a spring (20), which, as the primary compartment (24) is depressurized, presses the piston device (15) to such a position in which said valve device is opened and said channel (18) connects the primary compartment (24, 27) in such a way that at low primary pressure ($p_1<p_{10}$) the conversion ratio of the converter is approx. 1, which conversion ratio is used to close the linkage clearances of the brake system in the initial phase of braking.

## Revendications

1. Convertisseur de pression pour freins hydrauliques, en particulier pour freins de tracteur, comprenant un corps (10) et un dispositif à piston (15) placé dans des alésages ou logement analogues du corps, piston qui délimite une chambre primaire (24) et une chambre secondaire (27), la section droite A1 du piston dans la chambre primaire présentant une aire nettement supérieure à la section droite A2 du piston dans la chambre secondaire, et la pression primaire p1 étant transmise à la chambre primaire (24) à partir du maître-cylindre de l'installation de freinage ou d'un élément analogue, et la pression secondaire amplifiée p2 étant transmise de la chambre secondaire (27) au cylindre de roue, caractérisé en ce que ledit convertisseur de pression comporte en ensemble de soupape limitant la pression (25 à 27), permettant de limiter la pressure secondaire p2 à la pression secondaire maximale admissible p2max, en ce que des moyens (22, 23) sont présents pour laisser la pression secondaire p2, avant que le convertisseur agisse en amplifiant la pression secondaire, augmenter avec pratiquement le même gradient (courbe I, p1=p2) que la pression primaire, et en ce que le rapport de conversion (A1/A2) du convertisseur est choisi suffisamment élevé pour fournir pratiquement la pression secondaire maximale admissible (p2max), avec les pressions primaires (p11) disponibles au cours d'un freinage normal.

2. Convertisseur selon la revendication 1, caractérisé en ce que l'installation de limitation de la pression secondaire p2 comprend un canal (25) qui relie la chambre secondaire (27) à la chambre primaire (24), et en ce que l'enxemble de soupape (26, 27), agencé pour s'ouvrir pratiquement à la pression secondaire maximale admissible (p2max), est monté dans ledit canal.

3. Convertisseur de pression selon la revendication 1 ou 2, caractérisé en ce que le piston (15) du convertisseur de pression comporte un canal (18) auquel est associé un dispositif à soupape (19, 21, 22), et en ce que le convertisseur de pression comprend un ressort (20) qui, lorsque la chambre primaire (24) est dépressurisée, amène par pression le dispositif à piston (15) dans une position dans laquelle la soupape s'ouvre et le canal (18) relie la chambre primaire (24, 27) de telle façon qu'une pression primaire faible (p1:p10), le rapport de conversion du convertisseur est sensiblement égal à 1, rapport de conversion qui est utilisé pour fermer les jeux de tringlerie de l'installation de freinage au cours de la phase initiale du freinage.

**Patentansprüche**

1. Druckwandler für Hydraulikbremsen, insbesondere für Bremsen eines Traktors, der ein Gehäuse (10) und eine in Bohrungen oder der gleichen des Gehäuses angeordnete Kolbenvorrichtung (15) umfaßt, die einen ersten Bereich (24) und einen zweiten Bereich (27) festlegt, wobei der Querschnitt ($A_1$) des Kolbens im ersten Bereich eine wesentlich größere Fläche als der Querschnitt ($A_2$) des Kolbens im zweiten Bereich hat, und wobei der Primärdruck ($p_1$) von Bremssystem-Hauptzylinder oder dergleichen zum ersten Bereich (24) und der verstärkte Sekundärdruck ($p_2$) vom zweiten Bereich (27) zu dem Radzylinder geführt wird, dadurch gekennzeichnet, daß der Druckwandler mit einer Druckbegrenzungsventilanordnung (25 bis 27) ausgestattet ist, mittels der der Sekundärdruck ($p_2$) entsprechend dem maximalen zulässigen Sekundärdruck ($P_{2max}$) begrenzt wird, daß eine Einrichtung (22, 23) vorgesehen ist, die vor der Inbetriebsetzung des Wandlers zur Verstärkung des Sekundärdrucks ($p_2$) diesen mit im wesentlichen dem gleichen Gradienten Linie I, $p_1=P_2$) wie den Primärdruck steigen läßt, und daß das Wandlerverhältnis ($A_1/A_2$) des Wandlers so groß gewählt ist, daß der maximal zulässige Sekundärdruck ($P_{2max}$) aus bei normalen Bremsen Zur Verfügung stehenden Primärdrücken ($p_{11}$) in wesentlichen erzeugt wird.

2. Druckwandler nach Anspruch 1, wobei die Einrichtung zur Begrenzung des Sekundärdrucks ($p_2$) einen Kanal (25) umfaßt, der den zweiten Bereich (27) mit dem ersten Bereich (24) verbindet, und wobei eine Ventileinrichtung (26, 27), die so ausgelegt ist, daß sie im wesentlichen beim höchsten zulässigen Sekundärdruck ($P_{2max}$) öffnet, in den Kanal eingepaßt ist.

3. Druckwandler nach Anspruch 1 oder 2, wobei sich im Kolben (15) des Druckwandlers ein Kanal (18) befindet, dem eine Ventileinrichtung (19, 21, 22) zugeordnet ist, und daß der Druckwandler eine Feder (20) umfaßt, die, wenn der erste Bereich (24) nicht unter Druck gesetzt ist, die Kolbenvorrichtung (15) in eine solche Stellung drückt, in der die Ventileinrichtung geöffnet ist und der Kanal (18) den ersten Bereich (24) so verbindet, daß bei geringem Primärdruck ($p_1<p_{10}$) das Wandlerverhältnis des Wandlers ungefähr 1 ist, wobei dieses Wandlerverhältnis verwendet wird, um das Kopplungsspiel des Bremssystems in der Anfangsphase der Bremsung aufzunehmen.

FIG.1

FIG.2

FIG.3

1/1